# EUROPÄISCHE PATENTSCHRIFT

(11) **EP 2 447 803 B1**
(45) Veröffentlichungstag und Bekanntmachung des Hinweises auf die Patenterteilung: **12.07.2017**
(21) Anmeldenummer: 11008709.5
(22) Anmeldetag: 01.11.2011
(51) Int. Cl.: G05D 23/19, G05D 23/24

(54) **Beheizungssteuerung**
Heating control
Commande de chauffage

(30) Priorität: 02.11.2010 DE 102010050007
(43) Veröffentlichungstag der Anmeldung: 02.05.2012
(73) Patentinhaber: Böhm GmbH & Co. KG, 38723 Seesen (DE)
(72) Erfinder: Böhm, Elmar, Dr., 38723 Seesen (DE)
(74) Vertreter: Callies, Rainer Michael

(56) Entgegenhaltungen:
- DE-A1- 19 740 169
- DE-A1-102006 032 698
- Einbau-Und Betriebsanleitung ET AL: "Ex - Beheizungssteuerung FRB-1 Baureihe 1087", Seesen-Rhüden, 7 September 2009 (2009-09-07), pages 1-6, XP055335635, Seesen-Rhüden, DE Retrieved from the Internet: URL:http://www.winter-ex.de/FRB-1_1087_Bet riebsanleitung.pdf [retrieved on 2017-01-16]

## Beschreibung

Die Erfindung betrifft Beheizungssteuerungen nach dem Oberbegriff des Anspruchs 1 sowie Verfahren zur Funktionsüberprüfung einer Beheizungssteuerung nach dem Oberbegriff des Anspruchs 14.

Heizungen in der Industrie, insbesondere in chemischen und petrochemischen Anlagen, bilden potenzielle Gefahrenstellen. Ein Beispiel für eine solche Heizung ist eine Begleitheizung für eine ein Medium transportierende Rohrleitung. Die Temperatur der Beheizung wird in der überwiegenden Mehrzahl aller Anwendungen geregelt. Es kommen verschiedenste Temperaturregler, vom einfachsten Zweipunktregler bis zu komplexen elektronischen Geräten, zum Einsatz.

In der DE 197 40 169 A1 sind ein Verfahren und eine Vorrichtung zur Kontrolle der Temperaturregelung beheizbarer Vorrichtungen beschrieben. Ein Temperaturbegrenzer ist dabei jedoch nicht vorgesehen. Vielmehr wird ein Temperaturregler hinsichtlich einer möglichen Fehlerhaftigkeit überwacht. Die Überwachung basiert darauf, dass ein maximaler Temperatur-Istwert oder ein Maximalwert einer Änderungsgeschwindigkeit nicht überschritten werden dürfen.

Die DE 10 2006 032 698 A1 offenbart eine Vorrichtung und ein Verfahren zur Steuerung und Absicherung eines Heizelements, wobei aber ebenfalls kein Temperaturbegrenzer vorgesehen ist und somit das Problem einer Begrenzerüberwachung gar nicht gegeben ist.

Bei erhöhten Sicherheitsanforderungen, d.h. in chemischen und petrochemischen Anlagen nahezu immer, häufig aber auch in anderen Anlagen, werden ergänzend zum Temperaturregler Temperaturbegrenzer eingesetzt. In dieser Konfiguration sind die Temperaturbegrenzer das letzte Glied einer Sicherheitskette. Für explosionsgefährdete Bereiche wird gefordert, dass ein Temperaturbegrenzer im Fall einer Übertemperatur bleibend abschaltet und nur manuell zurückgesetzt werden darf.

In chemischen und petrochemischen Anlagen werden sowohl zentrale wie auch dezentrale Beheizungssteuerungen verwendet. Jeder Heizkreis soll gemäß Vorschrift durch eine Sicherung und einen Fehlerstromschutzschalter (FI-Schalter) ergänzt sein.

In beiden Fällen haben Temperaturregler und Temperaturbegrenzer jeweils einen eigenen Temperaturfühler. Gemäß einer Vorschrift ist der Temperaturfühler für den Temperaturbegrenzer so zu installieren, dass er die höchste Temperatur der Beheizung misst. Eine andere Installation könnte aber auch möglich bzw. erlaubt sein. Temperaturregler und Temperaturbegrenzer sind bei zentraler Installation im Regelfall zwei Einzelgeräte, im Fall einer dezentralen Installation in einem Gerät zusammengefasst. Auch bei der Zusammenfassung in einem Gerät arbeiten Temperaturregler und Temperaturbegrenzer unabhängig voneinander, d.h. zwischen Ihnen besteht keine Datenkommunikationsverbindung.

Bei allen Zulassungen wird größter Wert darauf gelegt, dass der Temperaturbegrenzer im Falle einer Übertemperatur sicher und bleibend abschaltet. Um diese Funktion zu gewährleisten, muss einerseits der Temperaturbegrenzer an sich funktionieren, andererseits muss der zugehörige Messfühler funktionieren und richtig installiert sein.

Praktisch wird die Konstruktion der Temperaturbegrenzer und Temperaturfühler so ausgelegt, dass ein Ausfall unwahrscheinlich ist. Vor dem Verkauf erfolgt, zumindest für im explosionsgefährdeten Bereich vorgesehene Geräte, eine Einzelstückprüfung. Für die Installation der Temperaturfühler gibt es detaillierte Vorschriften, die einzuhalten sind. Jeder Heizkreis soll gemäß Vorschrift vor Inbetriebnahme durchgemessen werden.

Grundsätzlich wird bei der Installation entsprechend dem Stand der Technik ein hohes Sicherheitsniveau erreicht, jedoch können einige mögliche Fehler nur mit sehr hohem Aufwand, d.h. in der Praxis meistens gar nicht, erkannt werden. Beispiele hierfür sind eine falsche Installation des Begrenzer-Temperaturfühlers, indem der Fühler in der Luft hängt (selten und kaum erkennbar) oder indem er nicht ausreichend thermisch isoliert ist (häufiger, nicht erkennbar) oder indem die thermische Isolierung des Fühlers feucht wird, wodurch er nicht mehr ausreichend thermisch isoliert ist (häufig und kaum erkennbar). Ferner können elektrische Fehler auftreten, wie korrodierte Kontakte, Kriechströme, welche einen zwar plausiblen, jedoch falschen Temperaturwert ergeben (sehr unwahrscheinlich, aber möglich). Weitere mögliche Fehler der Beheizungssteuerung sind ein Kurzschluss oder ein Leitungsbruch am Fühler (möglich und wird von den meisten Regelgeräten erkannt), ein Versagen des Temperaturbegrenzers im Betrieb (im Regelfall unwahrscheinlich, angesichts langer Betriebsdauern von mehr als 10 Jahren über eine solche Zeitspanne doch wahrscheinlich).

Grundsätzlich wäre eine Überprüfung möglich, z.B. durch periodisches Umklemmen der Fühlereingänge der Temperaturbegrenzer an Festwiderstände und Überprüfung der angezeigten Werte. In der Praxis ist diese Vorgehensweise aufwändig, und zudem wären damit dennoch große Zeitfenster ohne eine Überprüfung gegeben.

Der Erfindung liegt daher die Aufgabe zugrunde, eine gattungsgemäße Beheizungssteuerung vorzusehen, bei der mit einfachen Mitteln eine erhöhte Sicherheit durch verbesserte Erkennung einer Fehlfunktion der Beheizungssteuerung gegeben ist. Ferner liegt der Erfindung die Aufgabe zugrunde, ein gattungsgemäßes Verfahren vorzusehen, bei dem mit einfachen Mitteln eine erhöhte Sicherheit durch verbesserte Erkennung einer Fehlfunktion der Beheizungssteuerung gegeben ist.

Die Aufgabe bezüglich der Beheizungssteuerung wird durch die Merkmale des Anspruchs 1 gelöst.

Die Beheizungssteuerung weist einen Temperaturregler auf, der zur Verbindung mit einem Heizelement vorgesehen ist. Das Heizelement kann beispielsweise zur Beheizung einer Rohrleitung dienen. Der Temperaturregler hat die Funktion, die Temperatur des zu beheizenden Gegenstandes zu regeln, wozu er einen Mikroprozessor und einen Temperaturfühler aufweist, der an oder benachbart zu, also nahe dem zu beheizenden Gegenstand anzubringen ist. Dabei kann sich dieser Temperaturfühler auch nahe des Heizelementes befinden. Ferner weist die Beheizungssteuerung einen Temperaturbegrenzer mit einem eigenen Temperaturfühler auf, der an dem Heizelement angebracht werden soll, und zwar so, dass er die Temperatur des Heizelements an einer vorgegebenen Stelle misst. Vorzugsweise ist diese Stelle derartig, dass sie gemäß einer konstruktiven Vorgabe am wärmsten sein soll. Es ist aber auch möglich, dass die Stelle zwar nicht die wärmste ist, aber in einem bekannten Maße weniger warm ist als die wärmste Stelle des Heizelements. In diesem Falle ist die Temperaturdifferenz zwischen der Messstelle und der wärmsten Heizelementstelle definiert, so dass erfindungsgemäß die Temperaturdifferenz einbezogen bzw. berücksichtigt werden kann. Der Temperaturbegrenzer ist in der Lage, das Heizelement bleibend auszuschalten, wenn die Bedingung vorliegt, dass ein durch den Temperaturbegrenzer gemessener Temperaturwert eine vorgegebene Temperatur, die auch als Solltemperaturwert bezeichnet werden kann, überschreitet.

Der Temperaturregler und der Temperturbegrenzer sind durch eine Datenkommunikationsleitung miteinander verbunden, die zur Übertragung von Temperaturdaten von dem Temperaturbegrenzer zu dem Temperaturregler vorgesehen ist. Insbesondere kann es sich bei dem Temperaturregler und dem Temperaturbegrenzer um zwei einzelne Geräte handeln. Beide Geräte können in einem Gehäuse angeordnet sein. Um eine Funktionsprüfung der Beheizungssteuerung zu bewirken, ist der Temperaturregler so ausgelegt, dass er mittels seines Mikroprozessors Temperaturwerte des Heizelements abfragen kann, die von dem Temperaturbegrenzer mit einem vorbestimmten Zeitabstand gemessen worden sind. Der erste Temperaturwert kann insbesondere vor dem innerhalb der Regelung stattfindenden Einschalten des Heizelements gemessen sein, und der Temperaturregler ist in der Lage, den ersten Temperaturwert abzuspeichern. Der mindestens zweite Temperaturwert ist nach dem Einschalten des Heizelements gemessen worden, vorzugsweise während das Heizelement noch eingeschaltet war, oder aber gegebenenfalls auch kurz nach dem Ausschalten des Heizelements. Der Mikroprozessor ist in der Lage, diese mindestens zwei Temperaturwerte mit einem zu erwartenden Temperaturverlauf des Heizelements zu vergleichen und in dem Fall einen Alarm auszugeben, dass die abgefragten Temperaturwerte von dem zu erwartenden Temperaturverlauf stärker als in einem vorbestimmten Maße abweichen. Der zu erwartende Temperaturverlauf kann vorzugsweise lediglich aus wenigen Daten resultieren, wie zum Beispiel den Forderungen einer einzuhaltenden Norm, dem absoluten Zeitpunkt des Einschaltens des Heizelementes oder der Zeitdauer, während der das Heizelement zwischen den beiden Temperaturwertmessungen eingeschaltet gewesen ist. Wie unten beschrieben sind erfindungsgemäß zur Bestimmung des zu erwartenden Temperaturverlaufs nicht zwingend vorangegangene Berechnungen und Messungen erforderlich.

Diese erfindungsgemäße Beheizungssteuerung ist somit mit einfachen Mitteln ausgestattet, die es erlauben, dass die Steuerung sich selbst auf eine mögliche Fehlfunktion hin überprüfen kann. Anders als bei den bekannten Beheizungssteuerungen bleibt ein Versagen des Temperaturbegrenzers, bei welchem dieser den Heizkreis aber nicht abschaltet, nicht unbemerkt. Insbesondere wird durch die erfindungsgemäße Beheizungssteuerung eine Fehlfunktion des Temperaturbegrenzers detektiert, die darin besteht, dass der Begrenzer-Temperaturfühler in der Luft hängt, nicht ausreichend thermisch isoliert ist oder die thermische Isolierung des Fühlers feucht geworden ist.

Die Datenkommunikationsleitung zwischen dem Temperaturregler und dem Temperaturbegrenzer kann insbesondere durch einen Bus gegeben sein. Der Bus kann so ausgelegt sein, dass er sowohl Soll- und Istwerte von Temperaturen als auch Fehlermeldungen übertragen kann. Die Beheizungssteuerung kann ferner auch eine Leistungsregelung und eine Fehlerstromschutzschaltung aufweisen. Auch diese Komponenten können über den Bus zur Kommunikation miteinander verbunden sein. Ein übergeordneter Bus, welcher Fehlermeldungen in Schaltwarten oder an ähnliche Stellen übertragen kann, kann insbesondere ein MODBUS sein.

Die Beheizungssteuerung kann natürlich auch so ausgelegt sein, dass nach dem Einschalten des Heizelements zusätzlich zu dem zweiten Temperaturwert weitere in vorbestimmten Zeitabständen gemessene Temperaturen abgefragt, gespeichert und mit einem zu erwartenden Temperaturverlauf verglichen werden können.

Bei dem zu einem Alarm führenden vorbestimmten Maß einer Abweichung zwischen den abgefragten Temperaturwerten und dem zu erwartenden Temperaturverlauf kann es sich insbesondere um eine vorbestimmte Temperaturdifferenz handeln. Bei dem vorbestimmten Maß können aber auch weitere Plausiblitätsmerkmale berücksichtigt sein, wie beispielsweise im Falle von mehr als zwei abgefragten Temperaturwerten eine bestimmte Standardabweichung zwischen gemessenem und erwartetem Temperaturverlauf.

Eine besonders einfache und gleichzeitig aber auch in Bezug auf Sicherheitserhöhung sehr effektive Bedingung, bei der ein Alarm ausgegeben wird, ist, dass der zweite Temperaturwert nicht höher ist als der erste Temperaturwert, der vor dem Einschalten des Heizelements abgefragt worden ist. Wenn eine solche mit dem Einschalten des Heizkreises normalerweise verbundene Temperaturerhöhung nicht gemessen wird, muss mit sehr hoher Wahrscheinlichkeit ein Defekt vorliegen. Bei dieser erfindungsgemäßen Ausführungsform ist also das vorbestimmte Maß einer möglichen Abweichung, bis zu dem noch kein Alarm erfolgt, relativ groß bemessen. Mit anderen Worten lässt sich sagen, dass ein Alarm erst dann erfolgt, wenn der zweite gemessene Temperaturwert gar nicht höher ist als der erste. Ein wesentlicher Vorteil dieser Ausführungsform besteht in ihrer Einfachheit. So reicht es aus, wenn der Zeitpunkt der Messung des zweiten Temperaturwertes in angemessener Weise nach dem Einschalten des Heizelementes liegt. Es kann auch als Bedingung für einen Alarm vorgesehen sein, dass der zweite Temperaturwert nicht höher ist als die Summe aus dem ersten Temperaturwert und einem vorgegebenen Temperaturwert x. Diese Bedingung bedeutet mit anderen Worten, dass der zweite Temperaturwert nicht um ein vorgegebenes Maß über dem ersten liegt. Hier ist das Abweichungsmaß, oberhalb dessen ein Alarm erfolgt, reduziert. Auch dann, wenn der zweite Temperaturwert etwas höher als der erste ist, aber nicht um mehr als den Wert x, erfolgt ein Alarm. Bei beiden letztgenannten Ausführungsformen ist sehr vorteilhaft, dass keine aufwändigen, bei Konstruktion oder Inbetriebnahme vorangegangenen Berechnungen oder Messungen zur Bestimmung des zu erwartenden Temperaturverlaufs erforderlich sind.

Zudem kann auch vorgesehen sein, dass ein Alarm auch dann ausgegeben wird, wenn der zweite Temperaturwert-nicht höher ist als ein zum selben Zeitpunkt durch den Temperaturfühler des Temperaturreglers gemessener Temperaturwert. Insbesondere kann dies für die Ausführungsform vorgesehen sein, bei der der Temperaturfühler des Temperaturbegrenzers zur Messung der Temperatur des Heizelements an einer vorgegebenermaßen wärmsten Stelle vorgesehen ist.

Einen Defekt des Temperaturbegrenzers mit gegen 100% gehender Wahrscheinlichkeit zu detektieren, kann dadurch erreicht werden, dass die Funktionsprüfung bei jedem innerhalb der Regelung stattfindenden Einschalten des Heizelements vorgesehen ist.

Ferner kann auch vorgesehen sein, die Funktionsprüfung zusätzlich dann durchzuführen, wenn der Temperaturregler in Betrieb gesetzt wird.

Der Mikroprozessor des Temperaturreglers arbeitet normalerweise ständig, und er übernimmt die oben beschriebene Kommunikation. Vorzugsweise ist somit der Temperaturregler ausgelegt, Temperaturwerte, die aus einer kontinuierlichen bzw. zumindest in regelmäßigen Zeitabständen erfolgenden Temperaturmessung des Temperaturbegrenzers stammen, zyklisch in regelmäßigen Zeitabständen auszulesen. Wenn der Temperaturregler das Heizelement einschaltet, kann er den zuletzt ausgelesenen Temperaturwert als ersten Temperaturwert speichern.

Ein Defekt der Beheizungssteuerung kann auch dadurch auftreten, dass die Kommunikation zwischen dem Temperaturregler und dem Temperturbegrenzer gestört ist. Somit ist die Heizungssteuerung vorzugsweise ausgelegt, einen Alarm auch dann auszugeben, wenn der Mikroprozessor des Temperaturreglers keine abgefragten Temperaturwerte von dem Temperaturbegrenzer erhält.

Vorzugsweise ist die Beheizungssteuerung zusätzlich ausgelegt, eine Funktionsüberprüfung des Temperaturreglers durchzuführen. Dazu ist vorgesehen, dass der Temperaturbegrenzer ebenfalls einen Mikroprozessor aufweist und zwischen dem Temperaturregler und dem Temperaturbegrenzer eine Datenkommunikationsleitung besteht, die zur Übertragung von Daten von dem Temperaturregler zu dem Temperaturbegrenzer vorgesehen ist. Um eine Funktionsüberprüfung des Temperaturreglers vornehmen zu können, ist der Temperaturbegrenzer so ausgelegt, dass er mittels seines Mikroprozessors mindestens einen ersten und einen zweiten von dem Temperaturregler bzw. dessen Temperaturfühler gemessenen Temperaturwert des zu beheizenden Gegenstandes abfragen kann. Auch hier kann der erste Temperaturwert vor dem Einschalten des Heizelements gemessen sein; möglich ist aber auch, dass er erst nach dem Einschalten gemessen ist, wie dies stets für den zweiten Temperaturwert der Fall ist. Der Mikroprozessor des Temperaturbegrenzers ist ausgelegt, die abgefragten Temperaturwerte mit einem zu erwartenden Temperaturverlauf des zu beheizenden Gegenstandes zu vergleichen und einen Alarm dann auszugeben, wenn die abgefragten Temperaturwerte von dem zu erwartenden Temperaturverlauf stärker als in einem vorbestimmten Maße abweichen. Auch hier kann insbesondere vorgesehen sein, dass ein Alarm auszugeben ist, wenn der zweite Temperaturwert nicht höher als der erste ist.

Die oben genannte Aufgabe bezüglich der Beheizungssteuerung wird auch durch die Merkmale des Anspruchs 6 gelöst. Hierbei handelt es sich um eine gattungsgemäße Beheizungssteuerung, die ebenfalls dadurch gekennzeichnet ist, dass der Temperaturregler und der Temperaturbegrenzer durch eine Datenkommunikationsleitung miteinander verbunden sind. Die Datenkommunikationsleitung dient zur Übertragung von Temperaturdaten von dem Temperaturregler zu dem Temperaturbegrenzer. Der Temperaturbegrenzer weist ebenfalls einen Mikroprozessor auf. Wie oben als bevorzugte Ausführungsform der Beheizungssteuerung gemäß Anspruch 1 beschrieben, ist der Temperaturbegrenzer ausgelegt zu einer Funktionsprüfung der Beheizungssteuerung, indem der Mikroprozessor des Temperaturbegrenzers mindestens einen ersten und einen zweiten von dem Temperaturregler bzw. dessen Temperaturfühler gemessenen Temperaturwert abfragt, mit einem zu erwartenden Temperaturverlauf des zu beheizenden Gegenstandes vergleicht und bei einer stärkeren Abweichung als in einem vorbestimmten Maße einen Alarm ausgibt. Auch hier ist der Temperaturfühler des Temperaturbegrenzers vorzugsweise zur Temperaturmessung an einer Heizelementstelle vorgesehen, die gemäß einer konstruktiven Vorgabe am wärmsten sein soll. Es ist aber auch möglich, dass die Heizelementstelle zwar nicht die wärmste ist, aber in einem bekannten Maße weniger warm ist als die wärmste Stelle des Heizelements. In diesem Falle ist die Temperaturdifferenz zwischen der Messstelle und der wärmsten Heizelementstelle definiert, so dass erfindungsgemäß die Temperaturdifferenz einbezogen bzw. berücksichtigt werden kann.

Wenngleich eine Fehlfunktion des Temperaturreglers nicht so leicht unentdeckt bleibt wie eine Fehlfunktion des Temperaturbegrenzers, bietet auch diese erfindungsgemäße Beheizungssteuerung, die auf eine Selbstprüfung hinsichtlich des Temperaturreglers bezogen ist, eine durch einfache Mittel gegenüber bekannten Beheizungssteuerungen verbesserte Sicherheit. Bevorzugte Ausführungsformen der weiteren erfindungsgemäßen Beheizungssteuerung sind in den Ansprüchen 7 bis 13 aufgeführt. Diese entsprechen in ihren Merkmalen und auch Vorteilen oben beschriebenen Ausführungsformen der Beheizungssteuerung gemäß Anspruch 1. Auch die weiteren, im Zusammenhang mit der erstgenannten erfindungsgemäßen Beheizungssteuerung beschriebenen Ausführungsformen können entsprechend bei dieser weiteren Beheizungssteuerung vorgesehen sein. Insbesondere kann die Ausführungsform gemäß Anspruch 9 für den Fall vorgesehen sein, dass der Temperaturfühler des Temperaturbegrenzers zur Messung der Temperatur des Heizelements an einer vorgegebenermaßen wärmsten Stelle vorgesehen ist.

Wenn die Beheizungssteuerung gemäß Anspruch 5 ausgelegt ist, also zusätzlich eine Funktionsüberprüfung des Temperaturreglers vorgesehen ist, dann können alle Ausführungsformen bzgl. der dabei vorgesehenen Alarmausgabe entsprechend so vorgesehen sein, wie sie auch hinsichtlich der Alarmausgabe im Zusammenhang mit der Funktionsüberprüfung des Temperaturbegrenzers beschrieben sind.

Bei beiden erfindungsgemäßen Beheizungssteuerungen ist es vorteilhafterweise nicht erforderlich, dass sie einen externen Rechner aufweisen, da die Funktionsprüfung sehr einfach ausgelegt ist, wodurch sie auch sehr verlässlich ist. Gleichwohl ist es aber möglich, dass die Beheizungssteuerungen als Bestandteil einen externen Rechner mit entsprechender Software aufweisen. Dieser Rechner kann zur Kommunikation mit dem Temperaturregler und/oder Temperaturbegrenzer so ausgelegt sein, dass er Kommunikationsfehler, wie sie oben beschrieben worden sind, meldet. Der Rechner könnte auch dazu vorgesehen sein, dass er die entsprechenden Temperaturwerte erhält und eine Aussage über Plausibilitätsabweichungen zwischen den gemessenen und den erwarteten Temperaturwerten berechnet und gegebenenfalls meldet bzw. einen Alarm ausgibt. Auf diese Weise kann jeweils eine weitere Überwachungsebene durch den externen Rechner gegeben sein.

Die Aufgabe bezüglich des Verfahrens wird jeweils durch die Merkmale der Ansprüche 14 und 15 gelöst. Die für die Beheizungssteuerungen genannten Vorteile gelten entsprechend auch für die beiden erfindungsgemäßen Verfahren. Gemäß der Erfindung können weitere Ausgestaltungen der Verfahren vorgesehen sein, die entsprechend auf das Verfahren bezogene Merkmale gemäß der hier beschriebenen Ausführungsformen der erfindungsgemäßen Beheizungssteuerungen aufweisen.

Im Folgenden wird die Erfindung anhand von Ausführungsbeispielen näher erläutert, wobei auf die Figuren Bezug genommen wird. Es zeigen:

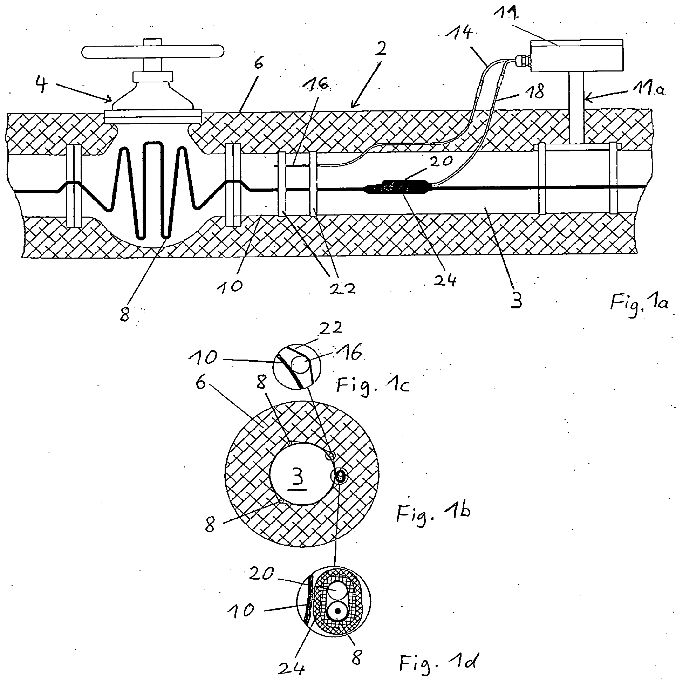

Fig. 1 a eine Teilansicht einer Rohrleitung und einer Begleitheizung mit einer Beheizungssteuerung im Längsschnitt,
Fig. 1 b schematisch eine Querschnittsansicht der Rohrleitung mit Begleitheizung gemäß Fig. 1 a,
Fig. 1 c eine vergrößerte Darstellung eines Temperaturfühlers eines Temperaturreglers der Begleitheizung,
Fig. 1d eine vergrößerte Darstellung eines Temperaturfühlers eines Temperaturbegrenzers der Begleitheizung,
Fig. 2 einen Anschlussplan und ein Blockschaltbild der Begleitheizung mit der Beheizungssteuerung,
Fig. 3 einen Programmablaufplan,
Fig. 4 einen beispielhaften Verlauf über die Zeit von Temperaturen, wie sie durch einen Temperaturfühler eines Temperaturbegrenzers und einen Temperaturfühler eines Temperaturreglers bei einer Löschwasserleitung gemessen werden,
Fig. 5 einen beispielhaften Verlauf über die Zeit von Temperaturen, wie sie durch einen Temperaturfühler eines Temperaturbegrenzers und einen Temperaturfühler eines Temperaturreglers bei einem von einem Produkt durchflossenen Rohr gemessen werden.

Der in Fig. 1 a gezeigte Abschnitt einer zu beheizenden Rohrleitung 2, die ein Rohr 3 mit einem Ventil 4 aufweist, ist von einer Wärmeisolierung 6 ummantelt. Ein Heizelement in Form einer Heizleitung 8 ist an der Rohrwandung 10 als Teil der Begleitheizung angebracht.

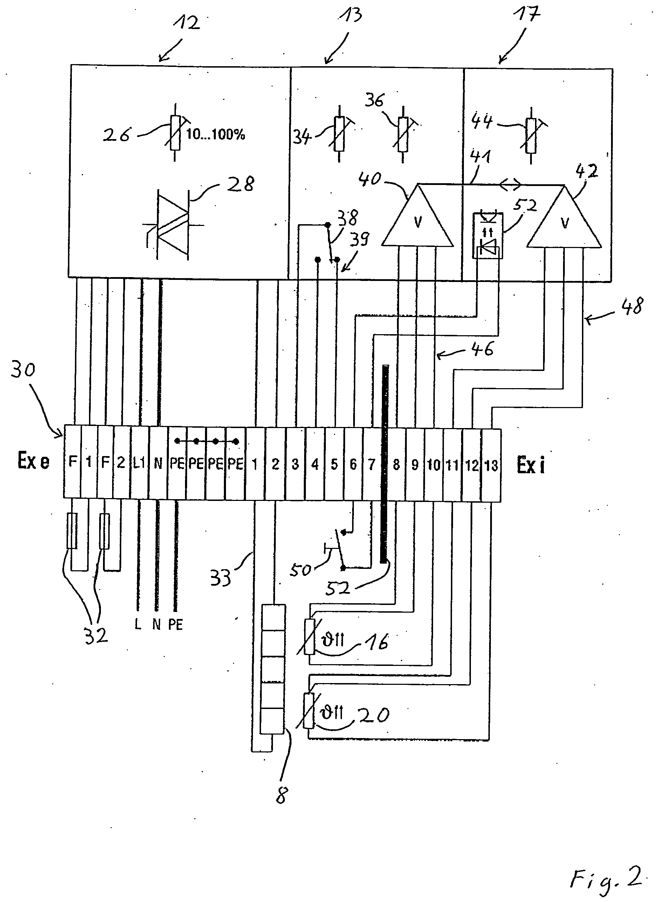

In einem Anschlusskasten 11 der Begleitheizung, welcher mit einer Halterung 11 a an dem Rohr 3 angebracht ist, befinden sich ein Leistungssteller 12 und ein Temperaturregler 13 (siehe Fig. 2), der einen über ein Kabel 14 angeschlossenen, direkt an der Rohrwandung 10 anliegenden Temperaturfühler 16 aufweist. Der Temperaturfühler 16 erfasst somit die Oberflächentemperatur des Rohres 3. Ferner ist in dem Anschlusskasten 11 ein Temperaturbegrenzer 17 (siehe Fig. 2) untergebracht, der einen über ein Kabel 18 verbundenen Temperaturfühler 20 aufweist.

Wie insbesondere in Fig. 1 c zu sehen ist, ist der Temperaturfühler 16 mit zwei Spannbändern 22 an der Rohrwandung 10 befestigt. Der Temperaturfühler 20 hingegen liegt unmittelbar an der Heizleitung 8 an, wobei an der Messstelle Heizleitung 8 und Temperaturfühler 20 von einer weiteren Wärmeisolierung 24 umhüllt sind. Der Temperaturfühler 20 liegt unmittelbar an der Heizleitung 8 an. Die Wärmeisolierung 24 trennt die Heizleitung 8 thermisch vom Rohr 3 und sorgt somit dafür, dass im Normalfall eine wärmste Stelle der Heizleitung 8 vorgegeben ist. Auf diese Weise misst der Temperaturbegrenzer 17 im Normalfall stets die höchste Temperatur der Heizleitung 8.

Es wird nun auf Fig. 2 Bezug genommen. Ein Leistungssteller 12 weist ein Trimmpotenziometer 26 und ein Hauptschütz 28 auf. Der Leistungssteller 12 ist über eine Klemmleiste 30 sowie einen Außenleiter L, einen Neutralleiter N und einen Schutzleiter PE mit einer Stromversorgungsquelle (nicht gezeigt) verbunden. Es ist eine externe Fehlerstromschutzschaltung vorgesehen (nicht gezeigt). Mit dem Bezugszeichen 32 sind Sicherungen bezeichnet. Der Leistungssteller 12 ist mit einem Laststromkreis 33 verbunden, wobei die Last in der Heizleitung 8 besteht.

Der Temperaturregler 13 besitzt ein Trimmpotenziometer 34, bei dem der Sollwert TSoll eingegeben werden kann, bei dem die Heizung eingeschaltet werden soll. Ferner weist der Temperaturregler 13 ein Trimmpotenziometer 36 auf, bei dem eine Tiefalarm-Temperatur eingestellt werden kann. Wenn die gemessene Temperatur des zu beheizenden Gegenstandes, hier des Rohres 3, diese Tiefalarm-Temperatur unterschreitet, wird mittels eines Relais 38 eine Alarmschleife 39 durch Öffnen oder Schließen, je nachdem wie geklemmt worden ist, geschaltet und so ein Alarm ausgegeben. Der Temperaturregler 13 weist einen Mikroprozessor 40 auf, welcher über eine Datenkommunikationsleitung 41 mit einem Mikroprozessor 42 des Temperaturbegrenzers 17 verbunden ist. Über die Datenkommunikationsleitung 41 können sowohl Temperaturdaten von dem Temperaturbegrenzer 17 zu dem Temperaturregler 13 als auch von dem Temperaturregler 13 zu dem Temperaturbegrenzer 17 übertragen werden.

Ferner weist der Temperaturbegrenzer 17 ein Trimmpotenziometer 44 auf, über das ein Sollwert TBSoll für die von dem Temperaturfühler 20 (ein Widerstandsthermometer Pt100) gemessene, maximale Temperatur der Heizleitung 8 eingestellt werden kann. Bei Überschreitung von TBSoll wird der Laststromkreis 33 geöffnet und verriegelt.

Der Temperaturfühler 16, bei dem es sich ebenfalls um ein Widerstandsthermometer Pt100 handelt, ist über einen 3-Leiteranschluss 46 mit dem Mikroprozessor 40 verbunden, während der Temperaturfühler 20 über einen 3-Leiteranschluss 48 mit dem Mikroprozessor 42 verbunden ist.

Es ist eine Entriegelungstaste 50 vorgesehen, die mit einem Optokoppler 52 des Temperaturbegrenzers 17 verbunden ist. Über eine Entriegelungstaste 50 kann extern eine Verriegelung des Laststromkreises 33 aufgehoben werden.

Die Klemmleiste 30 ist mit einer Trennplatte 52 versehen, die zwischen einem Schutzartbereich "Ex e", in dem relativ hohe Spannungsströme fließen dürfen, und einem Schutzartbereich "Ex i", in dem zur Vermeidung einer Explosionsgefahr Strom und Spannung jeweils einen bestimmten Grenzwert nicht überschreiten dürfen, trennt.

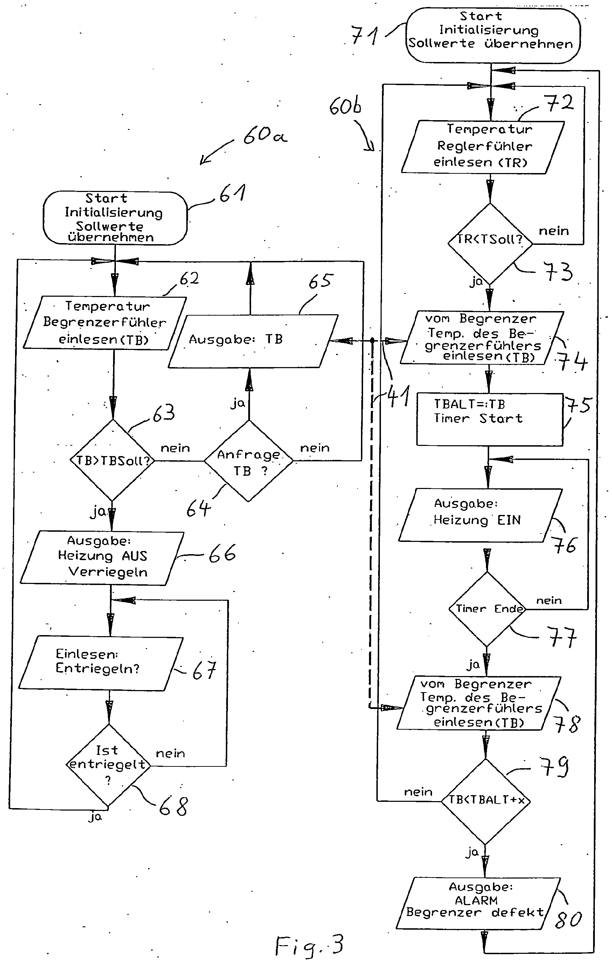

Die Arbeitsweise und das Zusammenwirken von Temperaturbegrenzer 17 und Temperaturregler 13 ist aus dem Programmablaufplan der Fig. 3 ersichtlich. Dieser wird im Folgenden erläutert: Ein Programm 60a des Temperaturbegrenzers 13 und ein Programm 60b des Temperaturreglers 17 laufen unabhängig voneinander auf deren jeweiligem Mikroprozessor 42 bzw. 40. Es wird mit der Erläuterung des Temperaturbegrenzers 17 begonnen. Dieser wird in Schritt 61 gestartet, initialisiert, und es wird zumindest ein Sollwert eingegeben, nämlich der Sollwert TBSoll für die maximale Temperatur der Heizleitung 8 an der vorgegeben wärmsten Stelle, oberhalb der der Temperaturbegrenzer 17 den Heizkreis 33 dauerhaft ausschaltet. In Schritt 62 wird die vom Begrenzer-Temperaturfühler 20 gemessene Temperatur TB eingelesen, und bei Schritt 63 findet die Abfrage statt, ob die Temperatur TB größer ist als der Sollwert TBSoll. Wenn dies nicht der Fall ist, also im Normalfall, wird bei Schritt 64 geschaut, ob eine Ausleseanfrage des Temperaturreglers 13 in Bezug auf die Temperatur TB vorliegt. Wenn dies der Fall ist, wird diese Temperatur dem Temperaturregler 13 bei Schritt 65 zur Verfügung gestellt; wenn dies nicht der Fall ist, wird nach einer vorbestimmten Zeit erneut die aktuelle vom Begrenzer-Temperaturfühler 20 gemessene Temperatur TB eingelesen.

Wenn die vom Temperaturfühler 20 gemessene Temperatur TB größer sein sollte als die Solltemperatur TBSoll, wird mit Schritt 66 die Heizung bzw. Heizleitung 8 dauerhaft ausgeschaltet, d.h. die Heizung wird verriegelt. In einem weiteren Schritt 67 erfolgt eine Anfrage an eine Bedienperson, ob eine Entriegelung stattfinden soll. Erst wenn eine Entriegelung stattgefunden hat, wird gemäß Entscheidungsschritt 68 ein neuer Temperaturwert TB eingelesen.

Nach dem Start, der Initialisierung und der Übernahme von Sollwerten für die Regelung der Temperatur der Heizleitung 8 bei Schritt 71 liest der Temperaturregler 13 die Temperatur TR ein, die der Regler-Temperaturfühler 16 aktuell misst (Schritt 72). Wenn diese nicht kleiner ist als ein im Rahmen der Regelung vorgegebener Temperatursollwert TSoll, wird dies in einem bestimmten Zeitabstand wiederholt. Wenn jedoch die Temperatur TR kleiner ist als der Temperatursollwert TSoll (Schritt 73), fragt der Temperaturregler 13 vor dem Beginn des Heizens in Schritt 74 nach dem von dem Temperaturbegrenzer 17 aktuell gemessenen Temperaturwert TB, und dieser Temperaturwert wird als ein erster Temperaturwert TBALT im Mikroprozessor 40 des Temperaturreglers 13 abgespeichert. Gleichzeitig läuft gemäß Schritt 75 ein Timer los, der einen vorbestimmten Zeitabstand nach dem Beginn des Heizens (Schritt 76) definiert. Wenn dieser Zeitabstand gegeben ist (Schritt 77), wird in Schritt 78 erneut die aktuell vom Temperaturbegrenzer 17 gemessene Temperatur TB abgefragt. In Schritt 79 wird geprüft, ob diese Temperatur TB kleiner ist als die vor Beginn des Heizens übermittelte Temperatur TBALT plus einem vorgegebenen Wert x. Mit anderen Worten, es wird geprüft, ob die vom Temperaturbegrenzer 17 übermittelte Temperatur nach Ablauf des Timers um den Wert x größer ist als die vor Beginn des Heizens übermittelte Temperatur (Schritt 79). Wenn dies nicht der Fall ist, wird ein Alarm "Begrenzer defekt" ausgelöst (Schritt 80).

Ein besonderer Vorteil dieser erfindungsgemäßen Ausführungsform ist, dass die gesamte Messkette des Temperaturbegrenzers 17, nämlich vom Temperaturfühler 20 über einen AD-Wandler und den Mikroprozessor 42 des Temperaturbegrenzers 17, überprüft wird. Ein Fehler des Temperaturbegrenzers 17, z.B. dass der Mikroprozessor 42 defekt ist oder der Programmablauf gestört ist, wird erkannt, da eine Kommunikation zwischen dem Temperaturbegrenzer 17 und dem Temperaturregler 13 nicht mehr möglich ist oder die vom Temperaturbegrenzer 17 gemessene Temperatur TB als konstanter Wert übermittelt wird. Ebenso wird erkannt, wenn der Begrenzer-Temperaturfühler 20 defekt oder falsch installiert ist.

Der Programmablaufplan der Fig. 3 zeigt nur eine Auswahl von relevanten Funktionen. Es sind viele Erweiterungen der Programme möglich (z.B. ein Ansteuern von Digitalanzeigen, Datenübermittlung an externe Geräte, weitere Alarmmeldungen etc.), ohne die Funktionalität der Programmabläufe zu stören.

Zum Beispiel kann für den Fall, dass der Temperaturregler 13 vom Temperaturbegrenzer 17 keinen Temperaturwert TB erhält (Schritt 74), also die Kommunikation zwischen dem Temperaturregler 13 und dem Temperaturbegrenzer 17 gestört ist, vorgesehen sein, dass ein Alarm ausgegeben wird. Bei dem Programmablauf 60b würde hingegen der Temperaturregler 13 lediglich nicht auf "Heizen" schalten, was ein "Fail-Safe-Verhalten" darstellen würde und unter Sicherheitsaspekten auch genügen könnte.

Der Programmablaufplan gemäß Fig. 3 betrifft der Übersichtlichkeit halber nur die Variante der Funktionsprüfung der Beheizungssteuerung mittels des Mikroprozessors 40 durch Abfrage von durch den Temperaturbegrenzer 17 gemessenen Temperaturwerten. Entsprechend kann wie beschrieben auch eine Funktionsprüfung der Beheizungssteuerung mittels des Mikroprozessors 42 vorgesehen sein, durch Abfrage von Temperaturwerten, die durch den Temperaturregler 13 gemessen worden sind.

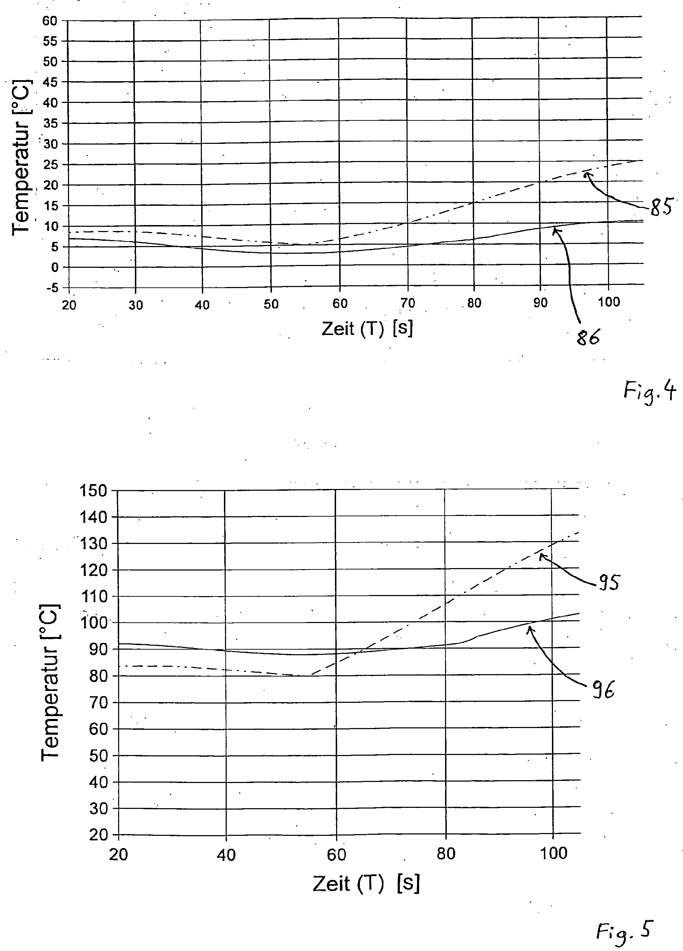

Es wird nun auf Fig. 4 Bezug genommen. Ein Temperaturfühler eines Temperaturreglers ist an einer Löschwasserleitung installiert, ein Temperaturfühler eines Temperaturbegrenzers direkt an einer Heizleitung. Hier könnte zum Beispiel die Anordnung gemäß Fig. 1a bis 1d gegeben sein. Der Begrenzer-Temperaturfühler könnte aber auch an einer anderen als der wärmsten Stelle der Heizleitung 8 angebracht sein, wobei dann vorzugsweise die Temperaturdifferenz zu der wärmsten Stelle vorgegebenermaßen bekannt sein sollte. Der Begrenzer-Temperaturfühler ist bei ausgeschalteter Beheizung etwas wärmer als die Löschwasserleitung. Der Temperaturverlauf des Begrenzer-Temperaturfühlers ist durch die Strichpunktlinie 85 dargestellt, der Temperaturverlauf des Regler-Temperaturfühlers durch die durchgezogene Linie 86.

Nach einem Einschalten der Beheizung zu einem Zeitpunkt T0 = 55 s (s = Sekunden) erwärmt sich die Heizleitung unmittelbar mit großem Temperaturgradienten, die Temperatur an der Löschwasserleitung bzw. am Regler-Temperaturfühler steigt mit Zeitverzögerung und kleinem Gradienten. Bei diesem Beispiel ist folgende erfindungsgemäße Betriebssituation gegeben bzw. vorgesehen: Zum Zeitpunkt T0 wird eine bzw. die vom Begrenzer-Temperaturfühler gemessene Temperatur TB0 gespeichert. Zu einem Zeitpunkt T1 = 85 s wird die vom Begrenzer-Temperaturfühler gemessene Temperatur TB1 mit der gespeicherten Temperatur TB0 verglichen. Im Normalfall ist TB1 > TB0. Wenn aber TB1 ≤ TB0 ist, erfolgt eine Störmeldung. Ergänzend wird zum Zeitpunkt T1 geprüft, ob die vom Begrenzer-Temperaturfühler gemessene Temperatur TB1 größer ist als eine zum Zeitpunkt T1 vom Regler-Temperaturfühler gemessene Temperatur TR1. Im Normalfall ist TB1 > TR1, eine Störmeldung erfolgt bei TB1 ≤ TR1. Die Zeitdifferenz zwischen T0 und T1 kann z.B. ca. 1 s bis ca. 15 min betragen.

Im Folgenden wird auf Fig. 5 Bezug genommen. Ein Temperaturfühler eines Temperaturreglers ist an einem von einem Produkt durchflossenen Rohr installiert, ein Temperaturfühler eines Temperaturbegrenzers direkt an einer Heizleitung. Auch hier könnte zum Beispiel die Anordnung gemäß Fig. 1a bis 1d gegeben sein, und der Begrenzer-Temperaturfühler könnte aber auch an einer anderen als der wärmsten Stelle der Heizleitung 8 angebracht sein, wobei dann vorzugsweise die Temperaturdifferenz zu der wärmsten Stelle vorgegebenermaßen bekannt sein sollte. Das Produktrohr ist bei ausgeschalteter Beheizung etwas wärmer als der Begrenzer-Temperaturfühler. Der Temperaturverlauf des Begrenzer-Temperaturfühlers ist durch die Strichpunktlinie 95 dargestellt, der Temperaturverlauf des Regler-Temperaturfühlers durch die durchgezogene Linie 96.

Nach einem Einschalten der Beheizung zu einem Zeitpunkt T0 = 55 s erwärmt sich die Heizleitung unmittelbar mit großem Temperaturgradienten, die Temperatur an dem Produktrohr bzw. am Regler-Temperaturfühler steigt mit Zeitverzögerung und kleinem Gradienten. Bei diesem Beispiel ist folgende erfindungsgemäße Betriebssituation gegeben bzw. vorgesehen: Zum Zeitpunkt T0 wird eine bzw. die vom Begrenzer-Temperaturfühler gemessene Temperatur TB0 gespeichert. Zu einem Zeitpunkt T1 = 85 s wird die vom Begrenzer-Temperaturfühler gemessene Temperatur TB1 mit der gespeicherten Temperatur TB0 verglichen. Im Normalfall ist TB1 > TB0. Wenn aber TB1 ≤ TB0 ist, erfolgt eine Störmeldung. Ergänzend wird zum Zeitpunkt T1 geprüft, ob die vom Begrenzer-Temperaturfühler gemessene Temperatur TB1 größer ist als eine zum Zeitpunkt T1 vom Regler-Temperaturfühler gemessene Temperatur TR1. Im Normalfall ist TB1 > TR1, eine Störmeldung erfolgt bei TB1 ≤ TR1.

Eine vorteilhafte Ausgestaltung kann darin bestehen, dass die ergänzende Prüfung zusätzlich zu einem späteren Zeitpunkt T2, z.B. nach weiteren 120 s, stattfindet. Zum Zeitpunkt T2 wird geprüft, ob die vom Begrenzer-Temperaturfühler zu diesem Zeitpunkt gemessene Temperatur TB2 größer als die zum selben Zeitpunkt (T2) vom Regler-Temperaturfühler gemessene Temperatur TR2. Im Normalfall ist TB2 > TR2, eine Störmeldung erfolgt bei TB2 ≤ TR2. Die Zeitdifferenz zwischen T0 und T2 kann z.B. ca. 5 s bis ca. 2 h betragen.

**Bezugszeichenliste:**

| | | | |
|---|---|---|---|
| 2 | Rohrleitung | 33 | Laststromkreis |
| 3 | Rohr | 34 | Trimmpotenziometer |
| 4 | Ventil | 36 | Trimmpotenziometer |
| 6 | Wärmeisolierung | 38 | Relais |
| 8 | Heizleitung | 39 | Alarmschleife |
| 10 | Rohrwandung | 40 | Mikroprozessor |
| 11 | Anschlusskasten | 41 | Datenkommunikationsverbindung |
| 11a | Halterung | 42 | Mikroprozessor |
| 12 | Leistungssteller | 44 | Trimmpotenziometer |
| 13 | Temperaturregler | 46 | 3-Leiteranschluss |
| 14 | Kabel von 16 | 48 | 3-Leiteranschluss |
| 16 | Temperaturfühler von 13 | 50 | Entriegelungstaste |
| 17 | Temperaturbegrenzer | 52 | Trennplatte |
| 18 | Kabel von 20 | 54 | Anschlüsse von 26 |
| 20 | Temperaturfühler von 17 | 60, 60a | Programm |
| 22 | Spannbänder | 61-68 | Programmschritte |
| 24 | Wärmeisolierung | 71-80 | Programmschritte |
| 26 | Trimmpotenziometer | 85 | Strichpunktlinie |
| 28 | Hauptschütz | 86 | durchgezogene Linie |
| 30 | Klemmleiste | 95 | Strichpunktlinie |
| 32 | Sicherungen | 96 | durchgezogene Linie |

## Patentansprüche

1. Beheizungssteuerung mit einem zur Verbindung mit einem Heizelement (8) vorgesehenen Temperaturregler (13), der zu einer Regelung einer Temperatur eines durch das Heizelement (8) zu beheizenden Gegenstandes (3) dient und einen Mikroprozessor (40) sowie einen an oder benachbart zu dem Gegenstand (3) anzubringenden Temperaturfühler (16) aufweist, und mit einem Temperaturbegrenzer (17), der einen zur Anbringung an dem Heizelement (8) vorgesehenen Temperaturfühler (20) zur Messung der Temperatur des Heizelements (8) an einer vorgegebenen Stelle, zum Beispiel einer vorgegebenermaßen wärmsten Stelle, aufweist und ausgelegt ist, das Heizelement (8) dauerhaft auszuschalten, wenn ein durch den Temperaturbegrenzer (17) mittels des Begrenzer-Temperaturfühlers (20) gemessener Temperaturwert eine vorgegebene Temperatur überschreitet,
**dadurch gekennzeichnet, dass** der Temperaturregler (13) und der Temperaturbegrenzer (17) durch eine Datenkommunikationsleitung (41) miteinander verbunden sind,
dass die Datenkommunikationsleitung (41) zur Übertragung von Temperaturdaten von dem Temperaturbegrenzer (17) zu dem Temperaturregler (13) vorgesehen ist,
dass der Temperaturregler (13) ausgelegt ist, zwecks einer Funktionsprüfung der Beheizungssteuerung mittels des Mikroprozessors (40) als von dem Temperaturbegrenzer (17) gemessene Temperaturen des Heizelements (8) mit einem vorbestimmten Zeitabstand mindestens einen ersten und einen zweiten Temperaturwert abzufragen, von denen zumindest der erste abgespeichert wird und zumindest der zweite nach dem Einschalten des Heizelements (8) und zeitlich in Verbindung mit dem eingeschalteten Zustand abgefragt wird, die abgefragten Temperaturwerte mit einem zu erwartenden Temperaturverlauf des Heizelements (8) zu vergleichen und einen Alarm dann auszugeben, wenn die abgefragten Temperaturwerte von dem zu erwartenden Temperaturverlauf stärker als in einem vorbestimmten Maße abweichen.

2. Beheizungssteuerung nach Anspruch 1, **dadurch gekennzeichnet, dass** ein Alarm auch dann ausgegeben wird, wenn der zweite Temperaturwert nicht höher ist als ein zum selben Zeitpunkt durch den Temperaturregler (13) mittels des Regler-Temperaturfühlers (16) gemessener Temperaturwert.

3. Beheizungssteuerung nach Anspruch 1 oder 2, **dadurch gekennzeichnet, dass** der Temperaturregler (13) ausgelegt ist, Temperaturwerte, die aus einer kontinuierlichen Temperaturmessung des Temperaturbegrenzers (17) stammen, zyklisch in regelmäßigen Zeitabständen auszulesen.

4. Beheizungssteuerung nach einem der vorhergehenden Ansprüche, **dadurch gekennzeichnet, dass** sie ausgelegt ist, einen Alarm auch dann auszugeben, wenn der Mikroprozessor (40) keine abgefragten Temperaturwerte erhält.

5. Beheizungssteuerung nach einem der vorhergehenden Ansprüche, **dadurch gekennzeichnet, dass** der Temperaturbegrenzer (17) ebenfalls einen Mikroprozessor (42) aufweist,
dass der Temperaturregler (13) und der Temperaturbegrenzer (17) durch eine Datenkommunikationsleitung (41), die zur Übertragung von Temperaturdaten von dem Temperaturregler (13) zu dem Temperaturbegrenzer (17) vorgesehen ist, miteinander verbunden sind,
und dass der Temperaturbegrenzer (17) ausgelegt ist, zwecks einer Funktionsüberprüfung des Temperaturreglers (13) mittels des Begrenzer-Mikroprozessors (42) als von dem Temperaturregler (13) gemessene Temperaturen des Gegenstandes (3) mit einem vorbestimmten Zeitabstand mindestens einen ersten und einen zweiten Temperaturwert abzufragen, von denen zumindest der erste abgespeichert wird und zumindest der zweite nach dem Einschalten des Heizelements (8) und zeitlich in Verbindung mit dem eingeschalteten Zustand abgefragt wird, die abgefragten Temperaturwerte mit einem zu erwartenden Temperaturverlauf des Gegenstandes (3) zu vergleichen und einen Alarm dann auszugeben, wenn die abgefragten Temperaturwerte von dem zu erwartenden Temperaturverlauf stärker als in einem vorbestimmten Maße abweichen.

6. Beheizungssteuerung mit einem zur Verbindung mit einem Heizelement (8) vorgesehenen Temperaturregler (13), der zu einer Regelung einer Temperatur eines durch das Heizelement (8) zu beheizenden Gegenstandes (3) dient und einen Mikroprozessor (40) sowie einen an oder benachbart zu dem Gegenstand (3) anzubringenden Temperaturfühler (16) aufweist, und mit einem Temperaturbegrenzer (17), der einen zur Anbringung an dem Heizelement (8) vorgesehenen Temperaturfühler (20) zur Messung der Temperatur des Heizelements (8) an einer vorgegebenen Stelle, zum Beispiel einer vorgegebenermaßen wärmsten Stelle, aufweist und ausgelegt ist, das Heizelement (8) dauerhaft auszuschalten, wenn ein durch den Temperaturbegrenzer (17) mittels des Begrenzer-Temperaturfühlers (20) gemessener Temperaturwert eine vorgegebene Temperatur überschreitet,
**dadurch gekennzeichnet, dass** der Temperaturregler (13) und der Temperaturbegrenzer (17) durch eine Datenkommunikationsleitung (41) miteinander verbunden sind,
dass die Datenkommunikationsleitung (41) zur Übertragung von Temperaturdaten von dem Temperaturregler (13) zu dem Temperaturbegrenzer (17) vorgesehen ist,
dass der Temperaturbegrenzer (17) ebenfalls einen Mikroprozessor (42) aufweist und ausgelegt ist, zwecks einer Funktionsprüfung der Beheizungssteuerung mittels des Begrenzer-Mikroprozessors (42) als von dem Temperaturregler (13) gemessene Temperaturen des Gegenstandes (3) mit einem vorbestimmten Zeitabstand mindestens einen ersten und einen zweiten Temperaturwert abzufragen, von denen zumindest der erste abgespeichert wird und zumindest der zweite nach dem Einschalten des Heizelements (8) und zeitlich in Verbindung mit dem eingeschalteten Zustand abgefragt wird, die abgefragten Temperaturwerte mit einem zu erwartenden Temperaturverlauf des Gegenstandes (3) zu vergleichen und einen Alarm dann auszugeben, wenn die abgefragten Temperaturwerte von dem zu erwartenden Temperaturverlauf stärker als in einem vorbestimmten Maße abweichen.

7. Beheizungssteuerung nach einem der vorhergehenden Ansprüche, **dadurch gekennzeichnet, dass** es sich bei dem vorbestimmten Maße um eine vorbestimmte Differenz handelt.

8. Beheizungssteuerung nach einem der vorhergehenden Ansprüche, **dadurch gekennzeichnet, dass** es sich bei dem ersten Temperaturwert um eine vor dem Einschalten des Heizelements (8) abgefragte Temperatur handelt und ein Alarm dann ausgegeben wird, wenn der zweite Temperaturwert nicht höher als der erste Temperaturwert ist.

9. Beheizungssteuerung nach Anspruch 6 oder Anspruch 7 mit Rückbezug auf Anspruch 6 oder nach Anspruch 8 mit Rückbezug auf Anspruch 6 oder 7, **dadurch gekennzeichnet, dass** ein Alarm auch dann ausgegeben wird, wenn der zweite Temperaturwert nicht niedriger ist als ein zum selben Zeitpunkt durch den Temperaturbegrenzer (17) mittels des Begrenzer-Temperaturfühlers (20) gemessener Temperaturwert.

10. Beheizungssteuerung nach einem der vorhergehenden Ansprüche, **dadurch gekennzeichnet, dass** sie ausgelegt ist, die Funktionsprüfung bei jedem Einschalten des Heizelements (8) innerhalb der Regelung durchzuführen.

11. Beheizungssteuerung nach einem der vorhergehenden Ansprüche, **dadurch gekennzeichnet, dass** sie ausgelegt ist, die Funktionsprüfung bei Inbetriebsetzen des Temperaturreglers (13) durchzuführen, indem das Heizelement (8) unabhängig von der Regelung eingeschaltet wird.

12. Beheizungssteuerung nach Anspruch 6 oder einem der Ansprüche 7 bis 11, jeweils mit Rückbezug auf zumindest Anspruch 6, **dadurch gekennzeichnet, dass** der Temperaturbegrenzer (17) ausgelegt ist, Temperaturwerte, die aus einer kontinuierlichen Temperaturmessung des Temperaturreglers (13) stammen, zyklisch in regelmäßigen Zeitabständen auszulesen.

13. Beheizungssteuerung nach Anspruch 6 oder einem der Ansprüche 7 bis 12, jeweils mit Rückbezug auf zumindest Anspruch 6, **dadurch gekennzeichnet, dass** sie ausgelegt ist, einen Alarm auch dann auszugeben, wenn der Begrenzer-Mikroprozessor (42) keine abgefragten Temperaturwerte erhält.

14. Verfahren zur Funktionsüberprüfung einer Beheizungssteuerung mit einem mit einem Heizelement (8) verbundenen Temperaturregler (13), der eine Temperatur eines durch das Heizelement (8) zu beheizenden Gegenstandes (3) regelt und einen Mikroprozessor (40) sowie einen an oder benachbart zu dem Gegenstand (3) angebrachten Temperaturfühler (16) aufweist, und mit einem Temperaturbegrenzer (17), der einen an dem Heizelement (8) angebrachten Temperaturfühler (20) zur Messung der Temperatur des Heizelements (8) an einer vorgegebenen Stelle, zum Beispiel einer vorgegebenermaßen wärmsten Stelle, aufweist und dazu dient, das Heizelement (8) dauerhaft auszuschalten (66), wenn ein durch den Temperaturbegrenzer (17) mittels des Begrenzer-Temperaturfühlers (20) gemessener Temperaturwert eine vorgegebene Temperatur überschreitet,
**dadurch gekennzeichnet, dass** der Temperaturregler (13) und der Temperaturbegrenzer (17) über eine Datenkommunikationsleitung (41) miteinander kommunizieren,
dass die Datenkommunikationsleitung (41) Temperaturdaten von dem Temperaturbegrenzer (17) zu dem Temperaturregler (13) überträgt (74,78),
dass der Temperaturregler (13) mittels des Mikroprozessors (40) als von dem Temperaturbegrenzer (17) gemessene Temperaturen des Heizelements (8) mit einem vorbestimmten Zeitabstand (75) mindestens einen ersten und einen zweiten Temperaturwert (74,78) abfragt, von denen zumindest der erste abgespeichert wird und zumindest der zweite nach dem Einschalten des Heizelements (8) und zeitlich in Verbindung mit dem eingeschalteten Zustand abgefragt wird, die abgefragten Temperaturwerte mit einem zu erwartenden Temperaturverlauf des Heizelements (8) vergleicht (79) und einen Alarm dann ausgibt (80), wenn die abgefragten Temperaturwerte von dem zu erwartenden Temperaturverlauf stärker als in einem vorbestimmten Maße abweichen.

15. Verfahren zur Funktionsüberprüfung einer Beheizungssteuerung mit einem mit einem Heizelement (8) verbundenen Temperaturregler (13), der eine Temperatur eines durch das Heizelement (8) zu beheizenden Gegenstandes (3) regelt und einen Mikroprozessor (40) sowie einen an oder benachbart zu dem Gegenstand (3) angebrachten Temperaturfühler (16) aufweist, und mit einem Temperaturbegrenzer (17), der einen an dem Heizelement (8) angebrachten Temperaturfühler (20) zur Messung der Temperatur des Heizelements (8) an einer vorgegebenen Stelle, zum Beispiel einer vorgegebenermaßen wärmsten Stelle, aufweist und dazu dient, das Heizelement (8) dauerhaft auszuschalten (66), wenn ein durch den Temperaturbegrenzer (17) mittels des Begrenzer-Temperaturfühlers (20) gemessener Temperaturwert eine vorgegebene Temperatur überschreitet,
**dadurch gekennzeichnet, dass** der Temperaturregler (13) und der Temperaturbegrenzer (17) über eine Datenkommunikationsleitung (41) miteinander kommunizieren,
dass die Datenkommunikationsleitung (41) Temperaturdaten von dem Temperaturregler (13) zu dem Temperaturbegrenzer (17) überträgt,
dass der Temperaturbegrenzer (17) ebenfalls einen Mikroprozessor (42) aufweist und mittels diesem als von dem Temperaturregler (13) gemessene Temperaturen des Gegenstandes (3) mit einem vorbestimmten Zeitabstand mindestens einen ersten und einen zweiten Temperaturwert abfragt, von denen zumindest der erste abgespeichert wird und zumindest der zweite nach dem Einschalten des Heizelements (8) und zeitlich in Verbindung mit dem eingeschalteten Zustand abgefragt wird, die abgefragten Temperaturwerte mit einem zu erwartenden Temperaturverlauf des Gegenstandes (3) vergleicht und einen Alarm dann ausgibt, wenn die abgefragten Temperaturwerte von dem zu erwartenden Temperaturverlauf stärker als in einem vorbestimmten Maße abweichen.

## Claims

1. Heating controller having a temperature regulator (13), which is provided for connection to a heating element (8), and which is used for a regulation of a temperature of an object (3) to be heated by the heating element (8) and which has a microprocessor (40) and also a temperature sensor (16) to be attached on or adjacent to the object (3), and having a temperature limiter (17), which has a temperature sensor (20), provided for attachment to the heating element (8), for measuring the temperature of the heating element (8) at a predefined point, for example, a point predefined as hottest, and is designed to permanently deactivate the heating element (8) if a temperature value measured by the temperature limiter (17) by means of the limiter temperature sensor (20) exceeds a predefined temperature,
**characterized in that** the temperature regulator (13) and the temperature limiter (17) are connected to one another by a data communication line (41),
the data communication line (41) is provided for transmitting temperature data from the temperature limiter (17) to the temperature regulator (13),
the temperature regulator (13) is designed, for the purpose of a function check of the heating controller, by means of the microprocessor (40), to query at least one first and one second temperature value as temperatures of the heating element (8) measured by the temperature limiter (17) at a predetermined time interval, of which at least the first is stored and at least the second is queried after the activation of the heating element (8) and chronologically in conjunction with the activated state, to compare the queried temperature values to a temperature curve to be expected of the heating element (8), and to output an alarm if the queried temperature values deviate from the temperature curve to be expected more strongly than a predetermined amount.

2. Heating controller according to Claim 1, **characterized in that** an alarm is also output if the second temperature value is not higher than a temperature value measured at the same point in time by the temperature regulator (13) by means of the regulator temperature sensor (16).

3. Heating controller according to Claim 1 or 2, **characterized in that** the temperature regulator (13) is designed to read out temperature values, which originate from a continuous temperature measurement of the temperature limiter (17), cyclically at regular time intervals.

4. Heating controller according to any one of the preceding claims, **characterized in that** it is designed to also output an alarm if the microprocessor (40) does not receive queried temperature values.

5. Heating controller according to any one of the preceding claims, **characterized in that** the temperature limiter (17) also has a microprocessor (42),
the temperature regulator (13) and the temperature limiter (17) are connected to one another by a data communication line (41), which is provided for transmitting temperature data from the temperature regulator (13) to the temperature limiter (17), and the temperature limiter (17) is designed, for the purpose of a function check of the temperature regulator (13), by means of the limiter microprocessor (42), to query at least one first and one second temperature value as temperatures of the object (3) measured by the temperature regulator (13) at a predetermined time interval, of which at least the first is stored and at least the second is queried after the activation of the heating element (8) and chronologically in conjunction with the activated state, to compare the queried temperature values to a temperature curve of the object (3) to be expected, and to output an alarm if the queried temperature values deviate from the temperature curve to be expected more strongly than a predetermined amount.

6. Heating controller having a temperature regulator (13), which is provided for connection to a heating element (8), and which is used for regulation of a temperature of an object (3) to be heated by the heating element (8), and which has a microprocessor (40) and a temperature sensor (16) to be attached on or adjacent to the object (3), and having a temperature limiter (17), which has a temperature sensor (20), provided for attachment to the heating element (8) for measuring the temperature of the heating element (8) at a predefined point, for example, a point predefined as hottest, and is designed to permanently deactivate the heating element (8) if a temperature value measured by the temperature limiter (17) by means of the limiter temperature sensor (20) exceeds a predefined temperature,
**characterized in that** the temperature regulator (13) and the temperature limiter (17) are connected to one another by a data communication line (41),
the data communication line (41) is provided for transmitting temperature data from the temperature regulator (13) to the temperature limiter (17),
the temperature limiter (17) also has a microprocessor (42) and is designed, for the purpose of a function check of heating controller, by means of the limiter microprocessor (42), to query at least one first and one second temperature value as temperatures of the object (3) measured by the temperature regulator (13) at a predetermined time interval, of which at least the first is stored and at least the second is queried after the activation of the heating element (8) and chronologically in conjunction with the activated state, to compare the queried temperature values to a temperature curve to be expected of the heating element (3), and to output an alarm if the queried temperature values deviate from the temperature curve to be expected more strongly than a predetermined amount.

7. Heating controller according to any one of the preceding claims, **characterized in that** predetermined amount is a predetermined difference.

8. Heating controller according to any one of the preceding claims, **characterized in that** the first temperature value is a temperature queried before the activation of the heating element (8) and an alarm is output if the second temperature value is not higher than the first temperature value.

9. Heating controller according to Claim 6 or Claim 7 with reference to Claim 6 or according to Claim 8 with reference to Claim 6 or 7, **characterized in that** an alarm is also output if the second temperature value is not lower than a temperature value measured at the same point in time by the temperature limiter (17) by means of the limiter temperature sensor (20).

10. Heating controller according to any one of the preceding claims, **characterized in that** it is designed to carry out the function check upon each activation of the heating element (8) within the regulation.

11. Heating controller according to any one of the preceding claims, **characterized in that** it is designed to carry out the function check upon startup of the temperature regulator (13), **in that** the heating element (8) is activated independently of the regulation.

12. Heating controller according to Claim 6 or one of Claims 7 to 11, each with reference to at least Claim 6, **characterized in that** the temperature limiter (17) is designed to read out temperature values, which originate from a continuous temperature measurement of the temperature regulator (13), cyclically at regular time intervals.

13. Heating controller according to Claim 6 or one of Claims 7 to 12, each with reference to at least Claim 6, **characterized in that** it is designed to also output an alarm if the limiter microprocessor (42) does not receive any queried temperature values.

14. Method for the function check of a heating controller having a temperature regulator (13) connected to a heating element (8), which regulates a temperature of an object (3) to be heated by the heating element (8), and has a microprocessor (40) and a temperature sensor (16) attached on or adjacent to the object (3), and having a temperature limiter (17), which has a temperature sensor (20) attached to the heating element (8) for measuring the temperature of the heating element (8) at a predefined point, for example, a point predefined as hottest, and is used to permanently deactivate (66) the heating element (8) if a temperature value measured by the temperature limiter (17) by means of the limiter temperature sensor (20) exceeds a predefined temperature,
**characterized in that** the temperature regulator (13) and the temperature limiter (17) communicate with one another via a data communication line (41),
the data communication line (41) transmits (74, 78) temperature data from the temperature limiter (17) to the temperature regulator (13),
the temperature regulator (13) queries (74, 78), by means of the microprocessor (40), at least one first and one second temperature value as temperatures of the heating element (8) measured by the temperature limiter (17) at a predetermined time interval (75), of which at least the first is stored and at least the second is queried after the activation of the heating element (8) and chronologically in conjunction with the activated state, compares (79) the queried temperature values to a temperature curve of the heating element (8) to be expected, and outputs (80) an alarm if the queried temperature values deviate from the temperature curve to be expected more strongly than a predetermined amount.

15. Method for the function check of a heating controller having a temperature regulator (13) connected to a heating element (8), which regulates a temperature of an object (3) to be heated by the heating element (8), and has a microprocessor (40) and a temperature sensor (16) attached on or adjacent to the object (3), and having a temperature limiter (17), which has a temperature sensor (20) attached to the heating element (8) for measuring the temperature of the heating element (8) at a predefined point, for example, a point predefined as hottest, and is used to permanently deactivate (66) the heating element (8) if a temperature value measured by the temperature limiter (17) by means of the limiter temperature sensor (20) exceeds a predefined temperature,
**characterized in that** the temperature regulator (13) and the temperature limiter (17) communicate with one another via a data communication line (41),
the data communication line (41) transmits temperature data from the temperature limiter (17) to the temperature regulator (13),
the temperature limiter (17) also has a microprocessor (42) and, by means of this microprocessor, queries at least one first and one second temperature value as temperatures of the object (3) measured by the temperature regulator (13) at a predetermined time interval, of which at least the first is stored and at least the second is queried after the activation of the heating element (8) and chronologically in conjunction with the activated state, compares the queried temperature values to a temperature curve of the object (3) to be expected, and outputs an alarm if the queried temperature values deviate from the temperature curve to be expected more strongly than a predetermined amount.

## Revendications

1. Commande de chauffage comportant un régulateur de température (13) prévu pour être connecté à un élément chauffant (8), lequel régulateur de température sert à réguler une température d'un objet (3) devant être chauffé par l'élément chauffant (8) et comporte un microprocesseur (40) ainsi qu'un capteur de température (16) devant être monté sur ou au voisinage de l'objet (3), et comportant un limiteur de température (17) qui comporte un capteur de température (20) prévu pour être monté sur l'élément chauffant (8) pour mesurer la température de l'élément chauffant (8) en un point prédéterminé, par exemple un point le plus chaud prédéterminé, et est conçu pour désactiver en permanence l'élément chauffant (8) lorsqu'une valeur de température mesurée par le limiteur de température (17) au moyen du capteur-limiteur de température (20) dépasse une température prédéterminée,
**caractérisé en ce que** le régulateur de température (13) et le limiteur de température (17) sont reliés l'un à l'autre par l'intermédiaire d'une ligne de communication de données (41),
**en ce que** la ligne de communication de données (41) est prévue pour transmettre des données de température du limiteur de température (17) au régulateur de température (13),
**en ce que** le régulateur de température (13) est conçu pour demander, au moyen du microprocesseur (40), à un intervalle de temps prédéterminé, à des fins de vérification du fonctionnement de la commande de chauffage, en tant que données de température de l'élément chauffant (8), mesurées par le limiteur de température (17), au moins une première et une deuxième valeurs de température, parmi lesquelles au moins la première est stockée et au moins la deuxième est demandée après activation de l'élément chauffant (8) et de manière temporellement liée à l'état activé, pour comparer les valeurs de température demandées à une courbe de température devant être attendue de l'élément chauffant (8) et pour ne délivrer une alarme que lorsque les valeurs de température demandées s'écartent de la courbe de température devant être attendue de plus d'une quantité prédéterminée.

2. Commande de chauffage selon la revendication 1, **caractérisée en ce qu'**une alarme n'est également délivrée que lorsque la deuxième valeur de température n'est pas supérieure à une valeur de température mesurée au même instant par le régulateur de température (13) au moyen du capteur-régulateur de température (16).

3. Commande de chauffage selon la revendication 1 ou 2, **caractérisée en ce que** régulateur de température (13) est conçu pour lire de manière cyclique à des intervalles de temps réguliers des valeurs de température qui proviennent d'une mesure de température continue du limiteur de température (17).

4. Commande de chauffage selon l'une quelconque des revendications précédentes, **caractérisée en ce qu'**elle est conçue pour ne délivrer également une alarme que lorsque le microprocesseur (40) n'obtient aucune valeur de température demandée.

5. Commande de chauffage selon l'une quelconque des revendications précédentes, **caractérisée en ce que** le limiteur de température (17) comporte également un microprocesseur (42),
**en ce que** le régulateur de température (13) et le limiteur de température (17) sont reliés l'un à l'autre par l'intermédiaire de la ligne de communication (41), qui est prévue pour transmettre des données de température du régulateur de température (13) au limiteur de température (17),
et **en ce que** le limiteur de température (17) est conçu pour demander au moyen du processeur-limiteur (42), à un intervalle prédéterminé, à des fins de vérification du fonctionnement du régulateur de température (13), en tant que données de température de l'objet (3), mesurées par le régulateur de température (13), au moins une première et une deuxième valeurs de température, parmi lesquelles au moins la première est stockée et au moins la deuxième est demandée après l'activation de l'élément chauffant (8) et de manière temporellement liée à l'état activé, pour comparer les valeurs de température demandées à une courbe de température devant être attendue de l'objet (3) et pour ne délivrer une alarme que lorsque les valeurs de température demandées s'écartent de la courbe de température devant être attendue de plus d'une quantité prédéterminée.

6. Commande de chauffage comportant un régulateur de température (13) prévu pour être relié à un élément chauffant (8), lequel régulateur de température sert à réguler une température d'un objet (3) devant être chauffé par l'élément chauffant (8) et comporte un microprocesseur (40) ainsi qu'un capteur de température (16) devant être monté sur ou au voisinage de l'objet (3), et comportant un limiteur de température (17) qui comporte un capteur de température (20) prévu pour être monté sur l'élément chauffant (8), pour mesurer la température de l'élément chauffant (8) en un point prédéterminé, par exemple un point le plus chaud prédéterminé, et est conçu pour désactiver en permanence l'élément chauffant (8) lorsqu'une valeur de température mesurée par l'intermédiaire du limiteur de température (17) au moyen du capteur-limiteur de température (20) dépasse une température prédéterminée, **caractérisé en ce que** le régulateur de température (13) et le limiteur de température (17) sont reliés l'un à l'autre par l'intermédiaire d'une ligne de communication de données (41),
**en ce que** la ligne de communication de données (41) est prévue pour transmettre des données de température du régulateur de température (13) au limiteur de température (17),
**en ce que** le limiteur de température (17) comporte également un microprocesseur (42) et est conçu pour demander au moyen du microprocesseur-limiteur (42), à un intervalle de temps prédéterminé, à des fins de vérification du fonctionnement de la commande de chauffage, en tant que données de température de l'objet (3), mesurées par le régulateur de température (13), au moins une première et une deuxième valeurs de température, parmi lesquelles au moins la première est stockée et au moins la deuxième est demandée après l'activation de l'élément chauffant (8) et de manière temporellement liée à l'état activé, pour comparer les valeurs de température demandées à une courbe de température devant être attendue de l'objet (3) et pour ne délivrer une alarme que lorsque les valeurs de température demandées s'écartent de la courbe de température devant être attendue de plus d'une quantité prédéterminée.

7. Commande de chauffage selon l'une quelconque des revendications précédentes, **caractérisée en ce que** la quantité prédéterminée est une différence prédéterminée.

8. Commande de chauffage selon l'une quelconque des revendications précédentes, **caractérisée en ce que** la première valeur de température est une température demandée avant l'activation de l'élément chauffant (8) et **en ce qu'**une alarme n'est délivrée que lorsque la deuxième valeur de température n'est pas supérieure à la première valeur de température.

9. Commande de chauffage selon la revendication 6 ou la revendication 7, lorsqu'elle dépend de la revendication 6, ou selon la revendication 8, lorsqu'elle dépend de la revendication 6 ou 7, **caractérisée en ce qu'**une alarme n'est également délivrée que lorsque la deuxième valeur de température n'est pas inférieure à une valeur de température mesurée au même instant par l'intermédiaire du limiteur de température (17) au moyen du capteur-limiteur de température (20).

10. Commande de chauffage selon l'une quelconque des revendications précédentes, **caractérisée en ce qu'**elle est conçue pour mettre en oeuvre la vérifiation du fonctionnement lors de chaque activation de l'élément chauffant (8) au coours de la régulation.

11. Commande de chauffage selon l'une quelconque des revendications précédentes, **caractérisée en ce qu'**elle est conçue pour mettre en oeuvre la vérification du fonctionnement lors de la mise en service du régulateur de température (13) en faisant en sorte que l'élément chauffant (8) soit activé indépendamment de la régulation.

12. Commande de chauffage selon la revendication 6 ou l'une quelconque des revendications 7 à 11, lorsqu'elles dépendent respectivement d'au moins la revendication 6, **caractérisée en ce que** le limiteur de température (17) est conçu pour lire cycliquement à des intervalles de temps réguliers, des valeurs de température qui proviennent d'une mesure de température continue du régulateur de température (13).

13. Commande de chauffage selon la revendication 6 ou l'une quelconque des revendications 7 à 12, lorsqu'elles dépendent respectivement d'au moins la revendication 6, **caractérisée en ce qu'**elle est conçue pour ne délivrer également une alarme que lorsque le microprocesseur-limiteur (42) n'obtient aucune valeur de température demandée.

14. Procédé de vérification du fonctionnement d'une commande de chauffage comportant un régulateur de température (13) relié à un élément chauffant (8), lequel régulateur de température régule une température d'un objet (3) devant être chauffé par l'élément chauffant (8) et un microprocesseur (40) ainsi qu'un capteur de température (16) monté sur ou au voisinage de l'objet (3), et comportant un limiteur de température (17) qui comporte un capteur de température (20) monté sur l'élément chauffant (8), pour mesurer la température de l'élément chauffant (8) en un point prédéterminé, par exemple un point le plus chaud prédéterminé, et sert à désactiver (66) en permanence l'élément chauffant (8) lorsqu'une valeur de température mesurée par le limiteur de température (17) au moyen du capteur-limiteur de température (20) dépasse une température prédéterminée,
**caractérisé en ce que** le régulateur de température (13) et le limiteur de température (17) sont reliés l'un à l'autre par l'intermédiaire d'une ligne de communication de données (41),
**en ce que** la ligne de communication de données (41) transmet (74, 78) des données de température du capteur de température (17) au régulateur de température (13), **en ce que** le régulateur de température (13) demande au moyen du microprocesseur (40), à un intervalle de temps prédéterminé (75), en tant que données de température de l'élément chauffant (8) mesurées par le limiteur de température (17), au moins une première et une deuxième valeurs de température (74, 78),
parmi lesquelles au moins la première est stockée et au moins la deuxième est demandée après l'activation de l'élément chauffant (8) et de manière temporellement liée à l'état activé, compare (79) la valeur de température demandée à une courbe de température devant être attendue de l'élément chauffant (8) et ne délivre (80) une alarme que lorsque les valeurs de température demandées s'écartent de la courbe de température devant être attendue de plus d'une quantité prédéterminée.

15. Procédé de vérification du fonctionnement d'une commande de chauffage comportant un régulateur de température (13) relié à un élément chauffant (8), lequel régulateur de température régule un objet (3) devant être chauffé par l'élément chauffant (8) et comporte un microprocesseur (40) ainsi qu'un capteur de température (16) monté sur ou au voisinage de l'objet (3), et comportant un limiteur de température (17) qui comporte un capteur de température (20) monté sur l'élément chauffant (8) pour mesurer la température de l'élément chauffant (8) en un point prédéterminé, par exemple un point le plus chaud prédéterminé, et sert à désactiver (66) en permanence l'élément chauffant (8) lorsqu'une valeur de température mesurée par l'intermédiaire du limiteur de température (17) au moyen du capteur-limiteur de température (20) dépasse une température prédéterminée,
**caractérisé en ce que** le régulateur de température (13) et le limiteur de température (17) communiquent l'un avec l'autre par l'intermédiaire d'une ligne de communication de données (41),
**en ce que** la ligne de communication de données (41) transmet des données de température du régulateur de température (13) au limiteur de température (17),
**en ce que** le limiteur de température (17) comporte également un microprocesseur (42) et demande au moyen de celui-ci, à un intervalle de temps prédéterminé, en tant que valeurs de température de l'objet (3), mesurées par le régulateur de température (13), au moins une première et une deuxième valeurs de température, parmi lesquelles au moins la première est stockée et au moins la deuxième est demandé après l'activation de l'élément chauffant (8) et de manière temporellement liée à l'état activé, compare les valeurs de température demandée à une courbe de température devant être attendue de l'objet (3) et ne délivre une alarme que lorsque les valeurs de température demandées s'écartent de la courbe de température devant être attendue de plus d'une quantité prédéterminée.
